# EUROPEAN PATENT APPLICATION

(11) **EP 4 390 121 A1**
(43) Date of publication of application: **26.06.2024**
(21) Application number: 22216449.3
(22) Date of filing: 23.12.2022
(51) Int. Cl.: F03D 17/00

(54) **CONDUCTOR OVERHEAT DETECTION FOR A WIND TURBINE AND WIND TURBINE**

(71) Applicant: Siemens Gamesa Renewable Energy A/S, 7330 Brande (DK)
(72) Inventor: TOFT, Anders Saaby, 8700 Horsens (DK)
(74) Representative: SGRE-Association

(57) **Abstract**

The present invention relates to an electrical system (1) for a wind turbine, comprising a first electrical device (2), a second electrical device (3), a plurality of electrical conductors (4) for electrically connecting the first electrical device (2) to the second electrical device (3) and a monitoring system (5) for monitoring a temperature condition of an electrical conductor (4). The monitoring system (5) comprises a monitoring device (6) and a first control loop (7) with a first temperature switch (8) for performing a temperature-dependent electrical switching action. The invention also relates to a method for operating an electrical system (1) of a wind turbine and to a method for retro-fitting an electrical system (1) of a wind turbine.

## Description

### FIELD OF THE INVENTION

The present invention relates to an electrical system for a wind turbine. The present invention further relates to a method for operating an electrical system of a wind turbine and to a method for retro-fitting an electrical system of a wind turbine.

### BACKGROUND

It is known that wind turbines comprise electrical systems for converting rotational energy of a rotor of the wind turbine into electrical energy for being supplied to an electric power grid. For this purpose, electrical systems for wind turbines comprise a plurality of different electrical devices, such as generators, rectifier, transformer or the like. For an electrical connection between these electrical devices, electrical conductors are provided.

Generally, for each electrical phase, at least one electrical conductor is provided. For larger applications, as used for wind turbines, each phase can be provided e.g., with six or twelve electrical conductors. This makes in total 18 or 36 electrical conductors for the electrical connection of two electrical devices. Moreover, since each electrical conductor has to be connected to two electrical devices, the amount of joints is two times the amount of electrical conductors.

For the establishment of an electrical coupling of the electrical conductors to the electrical devices, clamping is a widely used connection method. However, during operation, wind turbines are subjected to shock and vibration, e.g., due to changing winds, generator properties or the like. In some cases, this may result in an electrical conductor becoming loose.

### SUMMARY

Therefore, it is an object of the present invention to provide an electrical system for a wind turbine, which does not show the setbacks of the prior art. In particular, it is an object of the present invention to provide an electrical system for a wind turbine, a method for operating an electrical system of a wind turbine and a method for retro-fitting an electrical system of a wind turbine, which increase the operational reliability of the wind turbine in an efficient and cost-effective manner.

This problem is solved by the claims. Therefore, this object is solved by an electrical system for a wind turbine according to independent claim 1, a method for operating an electrical system of a wind turbine according to independent claim 8 and a method for retro-fitting an electrical system of a wind turbine according to independent claim 9. Further details of the invention unfold from the dependent claims as well as the description and the drawings.

According to a first aspect of the invention, the problem is solved by an electrical system for a wind turbine. The electrical system comprises:
a first electrical device,
a second electrical device,
a plurality of electrical conductors for electrically connecting the first electrical device to the second electrical device and
a monitoring system for monitoring a condition of an electrical conductor.

The monitoring system comprises a monitoring device for receiving monitoring information of the electrical conductor and a first control loop with a first temperature switch for performing a temperature-dependent electrical switching action. The first control loop is electrically connected to the monitoring device. The first temperature switch is attached to an electrical conductor of the plurality of electrical conductors, wherein the first temperature switch is configured for performing the electrical switching action when the temperature of the electrical conductor exceeds a first temperature threshold.

The first electrical device can be configured e.g., as a generator of the wind turbine for converting rotational energy into electrical energy. Preferably, the first electrical device comprises three electrical phases. More preferred, the first electrical device comprises six or twelve electrical joints for each phase, each configured for connecting an electrical connector. The electrical joints or the first electrical device may comprise a clamping mechanism for clamping the electrical conductor.

The second electrical device can be configured e.g., as a rectifier or transformer of the wind turbine for further converting the electrical energy provided by the generator. Preferably, the second electrical device comprises the same amount of electrical phases as the first electrical device. More preferred, the second electrical device comprises the same amount of joints for each phase as the first electrical device. It is preferred that the joints are configured for connecting an electrical connector. The electrical joints of the second electrical device may comprise a clamping mechanism for clamping the electrical conductor.

The first electrical device is connected to the second electrical device by the plurality of electrical conductors. Preferably, the electrical conductors comprise an electrically conducting material, such as copper or the like, which is encompassed by an electrical insulation layer. It is preferred that each electrical conductor is clamped with a first end to the first electrical device and a second end to the second electrical device.

The monitoring system is configured for monitoring the temperature condition of an electrical conductor. This means that the monitoring system is configured to detect if the temperature of the electrical temperature is below the first temperature threshold or above the first temperature threshold. Preferably, the first temperature threshold is defined as a temperature above a standard working temperature of the electrical conductors.

For this purpose, the monitoring system comprises the monitoring device and the first control loop. The first control loop is electrically connected to the monitoring device. Moreover, the first control loop is configured for providing a closed electrical loop for the monitoring device in a first operational condition and an open electrical loop for the monitoring device in a second operational condition of the first temperature switch. The monitoring device is configured for determining the respective operational condition.

The monitoring device is preferably configured for sending an electrical signal to a first end of the first control loop and to receive the signal from a second end of the first control loop. The signal may be a constant current flow, a pulsed signal or the like. When the first control loop is in the state of the closed electrical loop, the emitted electrical signal will return to the monitoring device through the first control loop. By detecting the electrical signal, the monitoring device identifies that the first control loop is in the first operational condition. When the first control loop is in the state of the open electrical loop, the emitted electrical signal will not return to the monitoring device through the first control loop. By acknowledging that the emitted electrical signal did not return, the monitoring device identifies that the first control loop is in the second operational condition.

For defining the working condition of the first control loop, the first control loop comprises the first temperature switch. The first temperature switch is configured for performing a temperature-dependent electrical switching action. In other words, the first temperature switch is configured for qualitatively detecting the temperature of an object, especially without sensing a tangible temperature value of the object. When the temperature of the object rises in a way that the first temperature threshold is exceeded, the first temperature switch will perform the electrical switching action. Within the limits of this invention, an electrical switching action is considered a binary switching action between two working conditions. Preferably, these two working conditions are providing an electrical conduct and interrupting the electrical conduct. In an advanced configuration, the first temperature switch can be configured for performing a switching action with three or four working conditions, wherein the intermediate working conditions between providing the electrical conduct and interrupting the electrical conduct can be working conditions with an increased resistance. It is preferred that the first temperature switch is configured for providing an erratic or digital switching action. It is also preferred that the first temperature switch is configured for not providing a gradient or analogue switching action. Preferably, the first temperature switch comprises a bi-metal part for performing the switching action as a result of the temperature-dependent shape of the bi-metal part.

The combination of the first control loop and the monitoring device is preferably implemented by simple components, such as a digital two switching state temperature switch for the first temperature switch and a digital two state analyzer for the monitoring device. Thus, using expensive temperature sensors and analogue signal converters, especially for determining an actual sensed temperature besides a predefined temperature threshold, can be avoided. Therefore, it is preferred that using such temperature sensors and analogue signal converters is avoided by the monitoring system according to the invention.

The first temperature switch is attached to one electrical conductor of the plurality of electrical conductors. Thus, the first temperature switch is configured to sense the temperature of the respective electrical conductor. It is preferred that the first temperature switch is attached to exact one electrical conductor. Alternatively, the first temperature switch can be attached to two or more electrical conductors of the plurality of electrical conductors. In such a configuration, it is preferred that the first temperature switch is configured for sensing the temperatures of the electrical conductors separately. This means that the first temperature switch is configured to already perform the switching action when the temperature of one of the respective electrical conductors exceeds the first temperature threshold.

The electrical system according to the invention has the advantage over common electrical systems that in a simple and inexpensive way, a critical operational status can be identified. By means of the first control loop and the monitoring device, the exceeding of the first temperature threshold by the electrical conductor can be reliably detected and countermeasures, such as power reduction of the rotor, extra maintenance sessions or the like, can be initiated. Thus, the risk of critical failure within the electrical system is reduced significantly.

In particular, the inventors identified that a current flow through the respective electrical conductor is reduced if a defect in the connection of the cable is occurring. The invention has the effect that it is prevented that the reduction of the current in a defectively connected cable is compensated by the other electrical conductors of the same phase. In other words, the current flow through these electrical conductors is not higher than without a loose electrical conductor. In combination with a high load of the wind turbine, an overheating of the electrical conductor, degrading insulation of the electrical conductors, short circuit and fire is prevented.

It is preferred that the first temperature switch is configured for performing the electrical switching action to provide an electrical conduct for the first control loop below the first temperature threshold and an electrical interrupt for the first control loop above the first temperature threshold. This means that for standard working temperatures of the electrical conductor, the first control loop is configured as a closed loop. A signal of the monitoring device will be guided through the first control loop and reach the monitoring device again. When the working temperature of the electrical conductor is above the standard working temperatures and exceeds the first temperature threshold, the first temperature switch will interrupt the electrical conductivity of the first control loop. In that case, the signal of the monitoring device will not reach the monitoring device, and, by these means, the monitoring device will detect that the first temperature threshold is exceeded. This configuration has the advantage that a reliability of the failure detection is increased. Due to the closed loop for standard working temperatures, a defect of the first temperature switch, which leads to an interruption of the electrical conductivity of the first control loop, can be detected easily and the defective parts can be replaced in a timely manner.

Further preferred, the first control loop comprises a plurality of first temperature switches, wherein the first temperature switches are assigned to different electrical conductors of the plurality of electrical conductors. It is preferred that at least 50 % of the electrical conductors are provided with at least one first temperature switch. More preferred, at least 75 % of the electrical conductors are provided with at least one first temperature switch. For the highest reliability, it is preferred that all of the electrical conductors are provided with at least one first temperature switch. It is preferred that the first temperature switches are arranged in series. In this case, the electric conductivity of the first control loop is interrupted when at least one of the first temperature switches senses the temperature above the first temperature threshold and switches to the open state. This has the advantage that in a simple and inexpensive way, the abnormal temperature rises of multiple electrical conductors can be monitored. Thus, the overall reliability of the failure detection is further increased.

According to a preferred embodiment of the invention, the first temperature threshold is a temperature between 60 °C and 100 °C, preferably between 80 °C and 95 °C. The first temperature threshold can be a selected temperature from one or more of these temperature ranges. The selection of the first temperature threshold is preferably dependent on climate conditions of the working site of the wind turbine and/or physical properties of the electrical conductors, such as diameter, insulation material or the like. This has the advantage that in a simple and inexpensive way, the overall reliability of the failure detection is further increased.

Preferably, the monitoring system comprises a second control loop with a second temperature switch for performing a temperature dependent electrical switching action, wherein the second temperature switch is attached to the electrical conductor of the first temperature switch, and wherein the second temperature switch is configured for performing the electrical switching action when the temperature of the electrical conductor exceeds a second temperature threshold. The second control loop is electrically connected to the monitoring device. The monitoring system is further configured to detect if the temperature of the electrical conductor is below the second temperature threshold or above the above the second temperature threshold. Moreover, the second control loop is configured for providing a closed electrical loop for the monitoring device in a first operational condition and an open electrical loop for the monitoring device in a second operational condition of the second temperature switch. The monitoring device is configured for determining the respective operational condition.

The monitoring device is preferably configured for sending an electrical signal to a first end of the second control loop and to receive the signal from a second end of the second control loop. The signal may be a constant current flow, a pulsed signal, or the like. When the second control loop is in the state of the closed electrical loop, the emitted electrical signal will return to the monitoring device through the first control loop. By detecting the electrical signal, the monitoring device identifies that the second control loop is in the first operational condition. When the second control loop is in the state of the open electrical loop, the emitted electrical signal will not return to the monitoring device through the second control loop. By acknowledging that the emitted electrical signal did not return, the monitoring device identifies that the second control loop is in the second operational condition.

For defining the working condition of the second control loop, the second control loop comprises the second temperature switch. The second temperature switch is configured for performing a temperature dependent electrical switching action. In other words, the second temperature switch is configured for qualitatively detecting the temperature of an object, especially without sensing a tangible temperature value of the object. When the temperature of the object rises in a way that the second temperature threshold is exceeded, the second temperature switch will perform the electrical switching action. In an advanced configuration, the second temperature switch can be configured for performing a switching action with three or four working conditions, wherein the intermediate working conditions between providing the electrical conduct and interrupting the electrical conduct can be working conditions with an increased resistance. It is preferred that the second temperature switch is configured for providing an erratic or digital switching action. It is also preferred that the second temperature switch is configured for not providing a gradient or analogue switching action. Preferably, the second temperature switch comprises a bi-metal part for performing the switching action as a result of the temperature dependent shape of the bi-metal part. Preferably, the second temperature threshold is a temperature between 110 °C and 150 °C and more preferred between 120 °C and 140 °C.

The second control loop is preferably implemented by simple components, such as a digital two switching state temperature switch. Thus, expensive temperature sensors, especially for qualitatively determining an actual temperature besides a predefined temperature threshold, can be avoided. Therefore, it is preferred that such temperature sensors are avoided by the monitoring system according to the invention.

The second temperature switch is attached to the same electrical conductor that the first temperature switch is attached to. Thus, the second temperature switch is configured to sense the temperature of the respective electrical conductor. It is preferred that the second temperature switch is attached to exact one electrical conductor. Alternatively, the second temperature switch can be attached to two or more electrical conductors of the plurality of electrical conductors. In such a configuration, it is preferred that the second temperature switch is configured for sensing the temperatures of the electrical conductors separately. This means that the second temperature switch is configured to already perform the switching action when the temperature of one of the respective electrical conductors exceeds the second temperature threshold. If the exceeding of the first temperature threshold is identified by the monitoring device before the exceeding of the second temperature threshold, which is defined higher than the first temperature threshold, is identified, the plausibility of this assessment can be supported. In case the exceeding of the second temperature threshold is identified without identifying the exceeding of the first temperature threshold, a technical problem of the monitoring system can be assumed. This has the advantage that failures of the monitoring system can be detected easier. This has the further advantage that in a simple and inexpensive way, the overall reliability of the failure detection is further increased.

It is preferred that the second temperature switch is configured for performing the electrical switching action to provide an electrical conduct for the second control loop below the second temperature threshold and an electrical interrupt for the second control loop above the second temperature threshold. This means that for standard working temperatures of the electrical conductor, the second control loop is configured as a closed loop. A signal of the monitoring device will be guided through the second control loop and reach the monitoring device again. When the working temperature of the electrical conductor is above the standard working temperatures and exceeds the second temperature threshold, the second temperature switch will interrupt the electrical conductivity of the second control loop. In that case, the signal of the monitoring device will not reach the monitoring device, and, by these means, the monitoring device will detect that the second temperature threshold is exceeded. Therefore, this configuration has the advantage that a reliability of the failure detection is increased. Due to the closed loop for standard working temperatures, a defect of the first temperature switch which leads to an interruption of the electrical conductivity of the first control loop can be detected easily, and the defective parts can be replaced in a timely manner.

Further preferred, the second control loop comprises a plurality of second temperature switches, wherein the second temperature switches are assigned to different electrical conductors of the plurality of electrical conductors. Preferably, the second temperature switches are attached to the same electrical conductors as the first temperature switches. It is preferred that at least 50 % of the electrical conductors are provided with at least one second temperature switch. More preferred, at least 75 % of the electrical conductors are provided with at least one second temperature switch. For the highest reliability, it is preferred that all of the electrical conductors are provided with at least one second temperature switch. It is preferred that the second temperature switches are arranged in series. In this case, the electric conductivity of the second control loop is interrupted when at least one of the second temperature switches senses the temperature being above the second temperature threshold and switches to the open state. This has the advantage that in a simple and inexpensive way, the abnormal temperature rises of multiple electrical conductors can be monitored. Thus, the overall reliability of the failure detection is further increased.

It is preferred that the electrical system comprises a control arrangement for controlling the first electrical device, wherein the control arrangement is configured for monitoring a current and/or voltage as a working parameter of the first electrical device and for receiving monitoring information from the monitoring device. Monitoring information can be information about exceeding the first setpoint temperature, about exceeding the second setpoint temperature or the like. Preferably, the control arrangement is configured for performing a plausibility check of the monitoring information based on the monitored current or voltage. If the monitored current or voltage is comparatively high, a monitoring information about exceeding the first temperature threshold and/or the second temperature threshold can be considered plausible. However, when the monitored current or voltage is comparatively low, such monitoring information can be a clue for a technical problem within the monitoring system or a severe technical problem within the electrical conductors, e. g., fire. This has the advantage that in a simple and inexpensive way, the overall reliability of the failure detection is further increased.

According to a second aspect of the invention, the problem is solved by a method for operating an electrical system of a wind turbine, wherein the electrical system is an electrical system according to the invention with the control arrangement and the second control loop. The method comprises:
determining a voltage and/or current as a working parameter of the first electrical device by the control arrangement,
monitoring an electrical current flow through the first control loop and the second control loop by the monitoring device,
identifying an overheating of an electrical conductor by the control arrangement when the determined working parameter is above a predetermined threshold value and a switching action within the second control loop is detected after detecting a switching action within the first control loop.

The determining of the voltage and/or current as the working parameter is preferably performed continuously or at least frequently with a determination rate of at least one determination each 30 seconds, preferably one determination each 10 seconds and more preferred one determination each second. The working parameter characterizes an operational state of the first electrical device, e.g., a generator of the wind turbine.

The monitoring device monitors the electrical current flow through the first control loop and the second control loop. This is preferably performed such that the monitoring device sends a continuous or pulsed electrical signal through the first control loop and the second control loop in order to receive the signal again from the respective loop. The monitoring system is preferably configured such that a reception of the signal indicates that the temperature of the electrical conductor is below the respective temperature threshold and vice versa. The monitoring result of the monitoring process is transferred from the monitoring system to the control arrangement. This transfer can be done with very simple signals, such as "0" for no temperature threshold exceeded, "1" for a first temperature threshold exceeded, "2" for a first temperature threshold and a second temperature threshold exceeded and "3" for a technical problem being detected within the monitoring system, e.g., because the monitoring result indicates that the second temperature threshold is exceeded, and the first temperature threshold is not exceeded. This indication cannot be correct, since the second temperature threshold is greater than the first temperature threshold. It is preferred that the monitoring system is configured in such a simple way that by the identification of an overheating of a current conductor, no particular electrical conductor can be identified.

The control arrangement evaluates the determined working parameter together with the transferred monitoring result and identifies the overheating of an electrical conductor when the determined working parameter is above a predetermined threshold value and the monitoring result is the exceeding of the first temperature threshold and the second temperature threshold, wherein a switching action within the second control loop is detected after detecting a switching action within the first control loop. The identified overheating of the electrical conductor is a strong indicator for a loose electrical connection of another electrical conductor. Therefore, it is preferred that the control arrangement issues an alert and/or initiates countermeasures, e.g., reducing the load of the first electrical device.

The method for operating an electrical system of a wind turbine according to the second aspect of the invention has the same advantages over the prior art than the electrical system for a wind turbine according to the first aspect of the invention. Accordingly, the method for operating an electrical system of a wind turbine according to the invention has the advantage over conventional methods that in a simple and inexpensive way, a critical operational status can be identified. By means of the first control loop, the second control loop and the monitoring device, the exceeding of the first temperature threshold and the second temperature threshold by the electrical conductor can be reliably detected, and countermeasures, such as power reduction of the rotor, extra maintenance sessions or the like, can be initiated. Thus, the risk of critical failure within the electrical system is reduced significantly.

Additionally and/or alternatively a further aspect is disclosed: a method for operating a wind turbine, in particular an offshore wind turbine, further in particular a floating offshore wind turbine, and for feeding electrical energy to an electricity grid, the method comprising the following steps:
executing steps of an embodiment of a method as disclosed supra, and/or operating an embodiment of a device as disclosed supra,
generating, by the wind turbine, electrical power and/or electrical energy,
transmitting at least a part of the electrical power and/or of the electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction,
supplying at least a part of the electrical power and/or of the electrical energy to an electrical utility grid, in particular onshore utility grid.

According to a third aspect of the invention, the object is achieved by a method for retro-fitting an electrical system of a wind turbine, wherein the first electrical device is electrically connected to a second electrical device of the electrical system by a plurality of electrical conductors. The method comprises:
providing a monitoring system for monitoring a condition of an electrical conductor of the plurality of electrical conductors, wherein the monitoring system comprises a monitoring device for receiving monitoring information for the electrical conductor and a first control loop with a plurality of first temperature switches, wherein the first temperature switches are configured for performing an electrical switching action when a temperature of the first temperature switch exceeds a first temperature threshold,
attaching the first temperature switches to different electrical conductors of the plurality of electrical conductors, and
electrically connecting the first control loop to the monitoring device.

The monitoring system can be provided onshore and then in case the wind turbine is an offshore wind turbine, offshore at the production site of the wind turbine.

The first temperature switches of the first control loop are attached to the electrical conductors of the electrical system. Preferably, this is performed such that at each electrical conductor or at least the majority of electrical conductors, a first temperature switch is attached. The attachment can be done by cable binders, thermo-resistant tape, thermo-resistant glue, or the like.

Moreover, the first control loop is electrically connected to the monitoring device. This can be done by plugging, clamping, soldering, screwing or the like. The electrical connection is established such that the first control loop provides an electrical loop for the monitoring device, which can be interrupted when at least one first temperature switch exceeds the first temperature threshold. Preferably, the monitoring system, especially the monitoring device of the monitoring system, is electrically connected to the control arrangement of the first electrical device. Thus, monitoring results can be transmitted from the monitoring device to the control arrangement.

The method for retro-fitting an electrical system of a wind turbine according to the third aspect of the invention has the same advantages over the prior-art than the electrical system for a wind turbine according to the first aspect of the invention and the method for operating an electrical system of a wind turbine according to the second aspect of the invention. Accordingly, the method for retro-fitting an electrical system of a wind turbine according to the invention has the advantage over conventional methods that in a simple and inexpensive way, an already operating wind turbine can be modified such that critical operational statuses can be identified. By means of the first control loop, the second control loop and the monitoring device, the exceeding of the first temperature threshold and of the second temperature threshold by the electrical conductor can be reliably detected, and countermeasures, such as power reduction of the rotor, extra maintenance sessions or the like, can be initiated. Thus, the risk of a critical failure within the electrical system is reduced significantly.

It is preferred that a second control loop with a plurality of second temperature switches is provided, wherein the second temperature switches are configured for performing an electrical switching action when a temperature of the second temperature switch exceeds a second temperature threshold. The second temperature switches are attached to different electrical conductors of the plurality of electrical conductors. Furthermore, the second control loop is electrically connected to the monitoring device.

The second temperature switches of a second control loop are attached to the electrical conductors of the electrical system. Preferably, this is performed such that at each electrical conductor or at least the majority of electrical conductors, a second temperature switch is attached. Preferably, each electrical conductor with a first temperature switch of the first control loop is provided with a second temperature switch of the second control loop. The attachment can be done by cable binders, thermo-resistant tape, thermo-resistant glue, or the like.

Moreover, the second control loop is electrically connected to the monitoring device. This can be done by plugging, clamping, soldering, screwing or the like. The electrical connection is established such that the second control loop provides an electrical loop for the monitoring device. This has the advantage that in a simple and inexpensive way, the overall reliability of the failure detection is further increased.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic segmented view of a part of an electrical system according to a preferred embodiment of the invention,
Fig. 2 is a schematic detailed view of two installed first temperature switches of a first control loop according to the invention,
Fig. 3 is a schematic perspective view of an electrical system according to the invention before assembly of the first control loop,
Fig. 4 is a schematic perspective view of an electrical system according to the invention with a monitoring system,
Fig. 5 is a first schematic diagram for the monitoring device according to the invention,
Fig. 6 is a second schematic diagram for a faulty monitoring device according to the invention and
Fig. 7 is a flow chart for a preferred embodiment of the method for operating an electrical system of a wind turbine according to the invention.

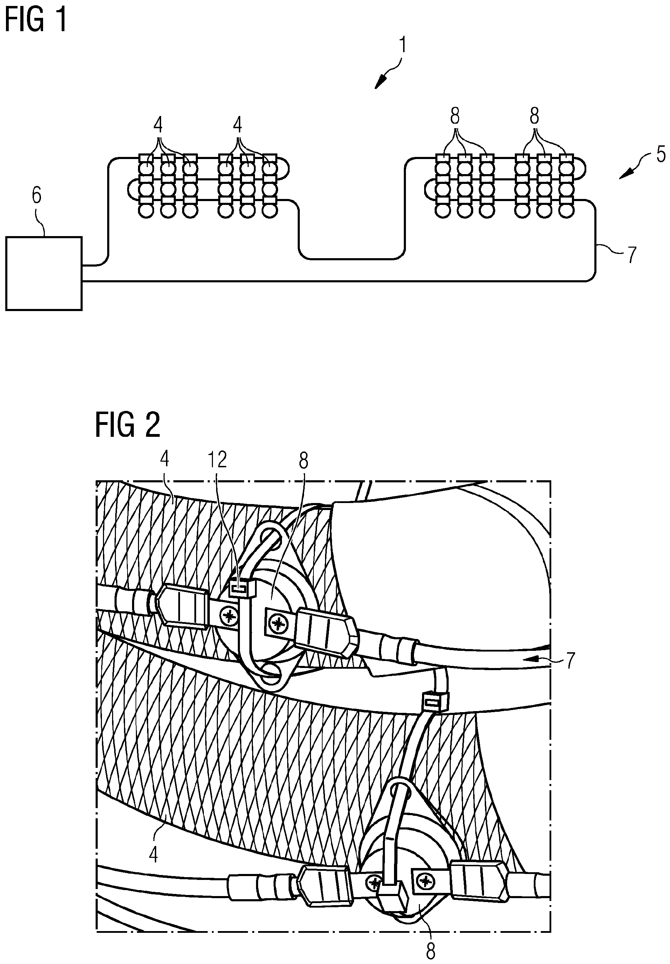

Elements with the same function and effectiveness are denoted each in figs. 1 - 7 with the same reference numbers.

### DETAILED DESCRIPTION

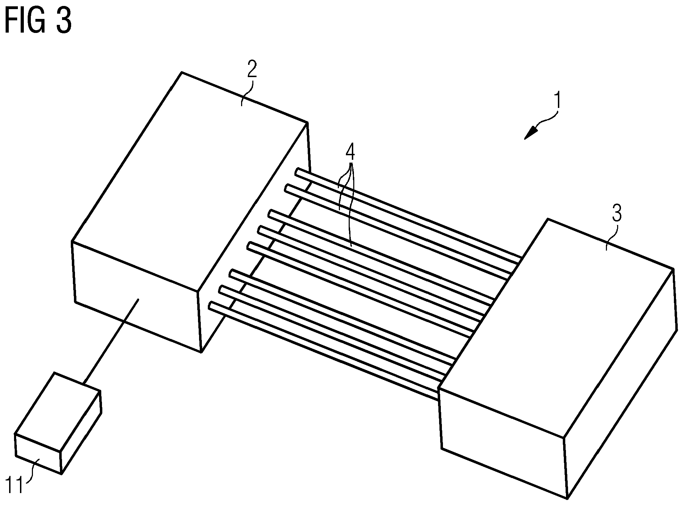

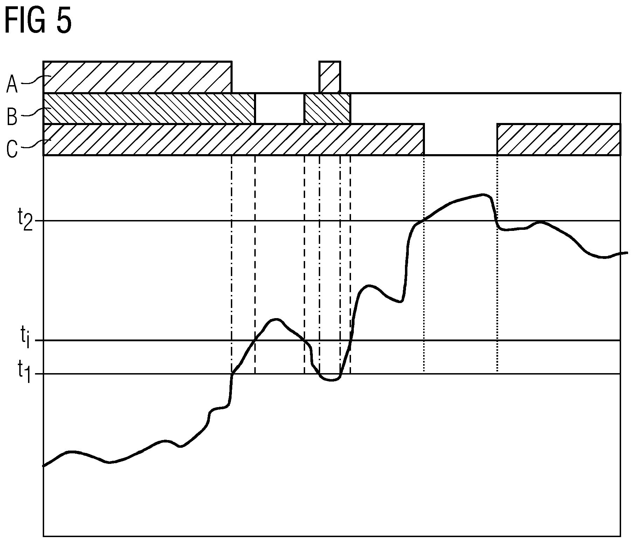

In fig. 1, a part of an electrical system 1 according to a preferred embodiment of the invention is shown in a schematic segmented view. The electrical system 1 comprises a plurality of electrical conductors 4 for connecting a not shown first electrical device 2 (cf. fig. 3) with a not shown second electrical device 3 (cf. fig. 3). The electrical system 1 further comprises a monitoring system 5 with a monitoring device 6 and a first control loop 7, electrically coupled to the monitoring device 6. The first control loop 7 comprises a plurality of first temperature switches 8, wherein at each electrical conductor 4, one of the first temperature switches 8 is attached to. Thus, a temperature of an electrical conductor 4 can be sensed by the respective first temperature switch 8. The first temperature switches 8 are configured for interrupting the first control loop 7, when the sensed temperature exceeds a first temperature threshold t₁ (cf. fig. 5).

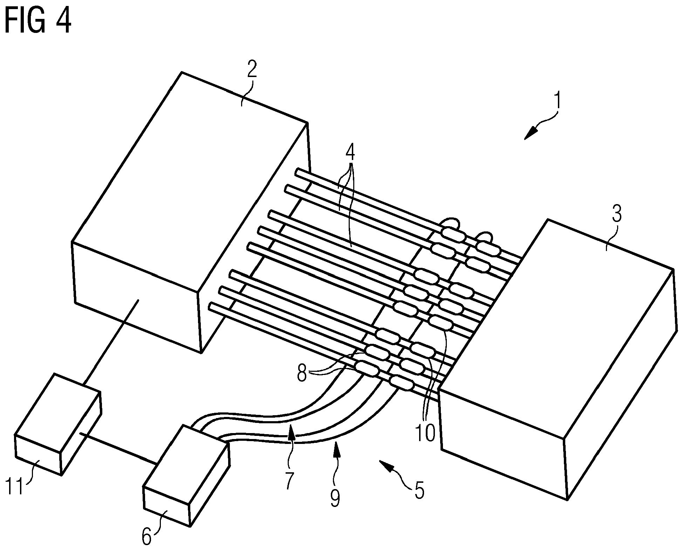

Fig. 2 shows two installed first temperature switches 8 of a first control loop 7 according to the invention in a schematic detailed view. The first temperature switches 8 are attached to different electrical conductors 4 by a cable binder 12. Both first temperature switches 8 are connected in series within the first control loop 7. Preferably, a not shown second control loop 9 (cf. fig. 4) and more preferred, an also not shown additional intermediate control loop are provided, wherein second temperature switches 10 (cf. fig. 4) of the second control loop and intermediate temperature switches of the intermediate control loop are attached to the same electrical conductors 4 as the first temperature switches 8. Thus, each electrical conductor 4 is provided with a first temperature switch 8, an intermediate temperature switch and a second temperature switch 10.

In fig. 3, an electrical system 1 according to the invention before assembly of the first control loop 7 is shown in a schematic perspective view. Fig. 4 shows the electrical system 1 with a monitoring system 5. The electrical system 1 for a wind turbine comprises a first electrical device 2, e.g., a generator, and a second electrical device 3, e.g., an electrical rectifier. The first electrical device 2 is electrically coupled with the second electrical device 3 by a plurality of electrical conductors 4. For controlling the first electrical device 2, the electrical system 1 comprises a control arrangement 11.

As shown in fig. 4, the electrical system 1 comprises a monitoring system 5 with a monitoring device 6, a first control loop 7 and a second control loop 9. The first control loop 7 and the second control loop 9 are electrically coupled to the monitoring device 6. The monitoring device 6 is electrically coupled to the control arrangement 11.

The first control loop 7 comprises a plurality of first temperature switches 8, each attached to another electrical conductor 4 for gathering the temperature of the respective electrical conductor 4. The second control loop 9 comprises a plurality of
second temperature switches 10, each attached to another electrical conductor 4 for gathering the temperature of the respective electrical conductor 4. By these means, at each electrical conductor 4, a first temperature switch 8 and a second temperature switch 10 are mounted. A not shown intermediate control loop can be provided likewise.

In fig. 5, a first schematic diagram for the monitoring device 6 according to the invention is illustrated. In the lower part of the diagram, a temperature curve of a selected electrical conductor 4 of the electrical system 1 is shown. In the upper part of the diagram, a first temperature indicator A, an intermediate temperature indicator B and a second temperature indicator C are shown. The temperature indicators indicate a condition in which the temperature of the electrical conductor 4 is below a respective threshold and, therefore, the respective control loop is in a closed state.

Starting from the left side, the temperature curve starts below a first temperature threshold t₁. In this time period, the first temperature indicator A indicates a closed first control loop 7, the intermediate temperature indicator indicates a closed intermediate control loop B, and the second temperature indicator C indicates a closed second control loop 9. This result is plausible, since the first temperature threshold t₁, e.g., 80 °C, is lower than the intermediate temperature threshold tᵢ, e.g., 90 °C and the intermediate temperature threshold tᵢ is lower than the second temperature threshold t₂, e.g., 120 °C.

For periods where the first temperature threshold t₁ is exceeded, the first temperature indicator A is interrupted. For periods where the intermediate temperature threshold is exceeded, the first temperature indicator A and the intermediate temperature indicator B are interrupted. For periods where the second temperature threshold t₂ is exceeded, the first temperature indicator A, the intermediate temperature indicator B and the second temperature indicator C are interrupted.

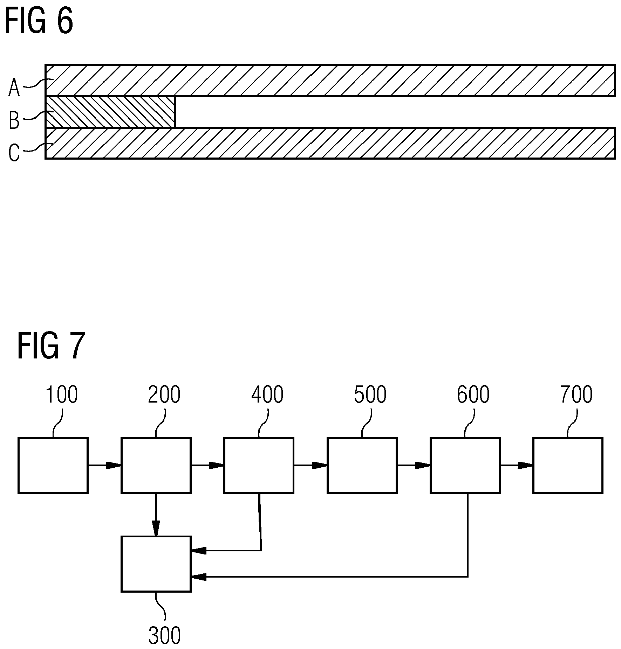

Fig. 6 shows a second schematic diagram for a faulty monitoring device 6 according to the invention. In this diagram, the first temperature indicator A is continuous, which indicates that the first temperature threshold t₁ is not exceeded. The intermediate temperature indicator B is interrupted, which indicates that the intermediate temperature threshold is exceeded. Since the intermediate temperature threshold is higher than the first temperature threshold t₁, the first temperature indicator A should be interrupted as well. Consequently, this diagram indicates a technical problem of the monitoring system 5.

In fig. 7, a flow chart for a preferred embodiment of the method for operating an electrical system 1 of a wind turbine according to the invention is shown. In a first step 100, the monitoring device 6 monitors the second control loop 9. When the second control loop 9 is interrupted, which indicates that for at least one electrical conductor 4, the second temperature threshold t₂ is exceeded, the monitoring device 6 checks the intermediate control loop in a second step 200. For a correctly working monitoring system 5, the intermediate control loop should be interrupted as well since the intermediate temperature threshold is lower than the second temperature threshold t₂.

In case the intermediate control loop is not interrupted, the monitoring device 6 issues a monitoring failure alarm in a third step 300. In case the intermediate control loop is interrupted, the monitoring device 6 checks the first control loop 7 in a fourth step 400. For a correctly working monitoring system 5, the first control loop 7 should be interrupted as well, since the first temperature threshold t₁ is lower than the intermediate temperature threshold and the second temperature threshold t₂.

In case the first control loop 7 is not interrupted, the monitoring device 6 issues the monitoring failure alarm in the third step 300. In case the first control loop 7 is interrupted, the monitoring device 6 transmits a conductor overheat alarm to the control arrangement 11 in a fifth step 500.

In a sixth step 600, the control arrangement 11 checks a voltage and/or current of the first electrical device 2. In case the voltage or current is below a predetermined threshold, the control arrangement 11 issues the monitoring failure alarm in the third step 300. In case the voltage or current is above the predetermined threshold, the control arrangement 11 issues a loose conductor alarm in a seventh step 700.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise notified, in addition to any combination of features belonging to one type of subject matter, any combination between features relating to different subject matters, in particular between features of the apparatus type claims and features of the method type claims, is also considered to be disclosed in this application.

## Claims

1. An electrical system (1) for a wind turbine, comprising
a first electrical device (2),
a second electrical device (3),
a plurality of electrical conductors (4) for electrically connecting the first electrical device (2) to the second electrical device (3) and
a monitoring system (5) for monitoring a temperature condition of an electrical conductor (4), the monitoring system (5) comprising
a monitoring device (6) for receiving monitoring information of the electrical conductor (4), and
a first control loop (7) with a first temperature switch (8) for performing a temperature dependent electrical switching action,
wherein the first control loop (7) is electrically connected to the monitoring device (6),
wherein the first temperature switch (8) is attached to an electrical conductor (4) of the plurality of electrical conductors (4) and is configured for performing the electrical switching action when the temperature of the electrical conductor (4) exceeds a first temperature threshold (t1).

2. The electrical system (1) according to claim 1, wherein the first temperature switch (8) is configured for performing the electrical switching action to provide an electrical conduct for the first control loop (7) below the first temperature threshold (t1) and an electrical interrupt for the first control loop (7) above the first temperature threshold (t1).

3. The electrical system (1) according to claim 1 or 2, wherein the first control loop (7) comprises a plurality of first temperature switches (8), wherein each first temperature switch (8) of the first temperature switches (8) is assigned to one single respective electrical conductor (4) of the plurality of electrical conductors (4), in particular wherein a respective electrical conductor (4) is equipped with not more first temperature switches than one single first temperature switch (8) .

4. The electrical system (1) according to claim 3, wherein all of the electrical conductors (8) are provided with at least one first temperature switch (8), and wherein the plurality of the first temperature switches (8) are arranged in series.

5. The electrical system (1) according to any of the previous claims, wherein the first temperature threshold (t1) is a temperature between 60 °C and 100 °C, preferred between 80 °C and 95 °C, and more preferred is approximately 90 °C.

6. The electrical system (1) according to any of the previous claims, wherein the monitoring system (5) comprises
a second control loop (9) with a second temperature switch (10) for performing a temperature dependent electrical switching action,
wherein second control loop (9) is electrically connected to the monitoring device (6),
wherein the second temperature switch (10) is attached to an electrical conductor (4) of the plurality of electrical conductors (4) and is configured for performing the electrical switching action when the temperature of the electrical conductor (4) exceeds a second temperature threshold (t2).

7. The electrical system (1) according to claim 6, wherein the second temperature switch (10) is configured for performing the electrical switching action to provide an electrical conduct for the second control loop (9) below the second temperature threshold (t2) and an electrical interrupt for the second control loop (9) above the second temperature threshold (t2).

8. The electrical system (1) according to claim 6 or 7, wherein the second control loop (9) comprises a plurality of the second temperature switches (10), wherein each second temperature switch (10) of the second temperature switches (10) is assigned to one single respective electrical conductor (4) of the plurality of electrical conductors (4), in particular wherein a respective electrical conductor (4) is equipped with not more second temperature switches than one single second temperature switches (10) .

9. The electrical system (1) according to claim 8, wherein all of the electrical conductors (8) are provided with at least one second temperature switch (10), and wherein the plurality of the second temperature switches (10) are arranged in series.

10. The electrical system (1) according to any of the claims 6 to 9, wherein the second temperature threshold (t2) is a temperature between 105 °C and 140 °C, preferred between 110 °C and 130 °C, and more preferred is approximately 120 °C.

11. The electrical system (1) according to any of the previous claims, wherein the electrical system (1) comprises a control arrangement (11) for monitoring an operational status of the first electrical device (2) and/or for controlling the first electrical device (2), wherein the control arrangement (11) is configured for monitoring a working parameter of the first electrical device (2), in particular a current and/or voltage of the controlling the first electrical device (2), and for receiving monitoring information from the monitoring device (6).

12. A wind turbine comprising a tower, a nacelle arranged on the tower, an electrical generator, a rotor having at least one rotor blade, wherein the rotor is rotatably arranged at the nacelle such that the electrical generator can be rotated by the rotor, and an electrical system (1) according to any of the previous claims, wherein the first electrical device (2) is the electrical generator or a device arranged in an electrical drive train of the wind turbine.

13. A method for operating an electrical system (1) of a wind turbine according to any of the claims 6 to 11 and/or for operating a wind turbine according to claim 12, the method comprising:
determining a working parameter of the first electrical device (2) by the control arrangement (11),
monitoring an electrical status of the first control loop (7) and of the second control loop (9) by the monitoring device (6), in particular by observing if a switching action within first and/or second control loop (7, 9) is occurring, and,
if the determined working parameter is above a predetermined threshold value and a switching action within the second control loop (9) is detected after detecting a switching action within the first control loop (7), determining an overheat of an electrical conductor (4) by the control arrangement (11), in particular the method further comprising: generating, by the wind turbine, electrical power and/or electrical energy, transmitting at least a part of the electrical power and/or of the electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction, and supplying at least a part of the electrical power and/or of the electrical energy to an electrical utility grid, in particular onshore utility grid.

14. Method for retro-fitting an electrical system (1) of a wind
turbine, wherein the first electrical device (2) is electrically connected to a second electrical device (3) of the electrical system (1) by a plurality of electrical conductors (4), the method comprising:
providing a monitoring system (5) for monitoring a condition of an electrical conductor (4) of the plurality of electrical conductors (4), wherein the monitoring system (5) comprises a monitoring device (6) for receiving monitoring information for the electrical conductor (4) and a first control loop (7) with a plurality of first temperature switches (8), wherein the first temperature switches (8) are configured for performing an electrical switching action when a temperature of the first temperature switch (8) exceeds a first temperature threshold (t1),
attaching the first temperature switches (8) to different electrical conductors (4) of the plurality of electrical conductors (4), and
electrically connecting the first control loop (7) to the monitoring device (6).

15. Method according to claim 14, further comprising:
providing a second control loop (9) with a plurality of second temperature switches (10), wherein the second temperature switches (10) are configured for performing an electrical switching action when a temperature of the second temperature switch (10) exceeds a second temperature threshold (t2),
attaching the second temperature switches (10) to different electrical conductors (4) of the plurality of electrical conductors (4), and
electrically connecting the second control loop (9) to the monitoring device (6).
